# FASCICULE DE BREVET EUROPEEN

(11) **EP 1 426 239 B1**
(45) Date de publication et mention de la délivrance du brevet: **11.01.2006**
(21) Numéro de dépôt: 03292847.5
(22) Date de dépôt: 17.11.2003
(51) Int. Cl.: B60R 13/08, B60J 10/08, B60J 5/04

(54) **Feuille d'étanchéité et d'insonorisation pour un élément de carrosserie, tel qu'une porte de véhicule automobile**
Dichtungs- und Schalldämpfungssplatte für ein Karosserieelement, wie ein Autotür
Seal and sound insulation sheet for a vehicle body élément, such as a car door

(30) Priorité: 02.12.2002 FR 0215170
(43) Date de publication de la demande: 09.06.2004
(73) Titulaire: Sofitec SA, 78530 Buc (FR)
(72) Inventeur: Proux, Georges, 78220 Viroflay (FR)
(74) Mandataire: Cabinet Martinet & Lapoux

(56) Documents cités:
- EP-A- 0 737 602
- DE-U- 8 033 511
- DE-U- 20 006 192
- US-A- 5 961 904
- US-A1- 2002 170 776

## Description

La présente invention concerne une feuille d'étanchéité et d'insonorisation pour un élément de carrosserie, tel en particulier qu'une porte de véhicule automobile.

Dans la technique connue, il est habituel de fixer, sur la tôle interne d'une porte de véhicule automobile, une feuille d'étanchéité et d'insonorisation recouverte, du côté intérieur du véhicule, d'un panneau de finition comprenant des accessoires tels qu'un accoudoir, un vide-poche, des moyens de commande de la montée et de la descente d'une vitre, etc.

La feuille d'étanchéité et d'insonorisation, qui peut être formée d'une couche de mousse de matière plastique à cellules fermées ou de plusieurs couches de matières différentes, est en général fixée sur la tôle interne de la porte par un cordon ou un ruban de colle qui est déposé sur la feuille le long du bord périphérique de celle-ci, à faible distance de ce bord.

Pour fixer la feuille sur la tôle interne de la porte, il faut positionner la feuille à l'emplacement correct sur la tôle, puis passer une roulette sur la face extérieure de la feuille le long de sa périphérie pour bien appuyer le cordon ou le ruban de colle sur la tôle et assurer une fixation correcte et continue de la feuille sur la tôle. Le cordon de colle a une longueur relativement importante, par exemple de l'ordre de trois mètres, et son écrasement au moyen d'une roulette tenue à la main prend du temps. De plus, les feuilles d'étanchéité et d'insonorisation sont livrées empilées les unes sur les autres et sont fixées les unes aux autres par leurs cordons de colle dans la pile. Leur dépilage pour leur fixation sur les tôles des portes est plus ou moins long et plus ou moins facile en fonction de la composition des feuilles et des colles utilisées. On a proposé, pour éviter cet inconvénient, de placer un revêtement protecteur tel qu'un papier silicané par exemple sur chaque cordon ou ruban de colle, mais cela augmente le coût du produit.

Pour fixer le cadre sur le support, la demande de brevet US 20002/0170776 divulgue une feuille d'étanchéité et d'insonorisation pour élément de carrosserie, telle que définie dans le préambule de la revendication 1. Les moyens de fixation comprennent un panneau de finition qui avec la feuille enserre le cadre au moyen de quelques vis ou pions de clipsage pour fixer le panneau de finition sur le support et assurent ainsi une compression continue du cordon ou du ruban de matière adhésive sur le support, ce qui garantit une bonne fixation de la feuille d'étanchéité et d'insonorisation sur le support. Cependant un revêtement protecteur tel qu'un papier protecteur est encore posé sur le cordon ou ruban de matière adhésive pour faciliter le dépilage des feuilles d'étanchéité et d'insonorisation.

La présente invention a notamment pour but d'apporter une solution simple, satisfaisante et économique aux problèmes de dépilage de ces feuilles.

Elle a pour objet une feuille d'étanchéité et d'insonorisation du type précité, que l'on peut fixer par collage sur une tôle sans utiliser de roulette et que l'on peut transporter empilée avec d'autres feuilles du même type, sans qu'il soit nécessaire de poser des revêtements protecteurs sur les cordons ou rubans de colle et sans qu'il soit long et difficile de dépiler les feuilles pour leur utilisation.

Elle propose à cet effet une feuille d'étanchéité et d'insonorisation pour élément de carrosserie, en particulier pour porte de véhicule automobile, telle que définie dans la revendication 1. Les irrégularités de surface sont destinées à réduire la surface de contact du cadre avec le cordon ou ruban de matière adhésive d'une autre feuille d'étanchéité et d'insonorisation dans un empilement desdites feuilles.

On peut ainsi empiler les feuilles et les cadres et les séparer facilement du fait de la surface réduite de contact de chaque cadre avec le cordon ou ruban de matière adhésive d'une feuille supérieure de la pile.

Selon une autre caractéristique de l'invention, le cadre est de forme générale ondulée et comporte, entre ses moyens de fixation sur le support, des parties incurvées destinées à appliquer la feuille sur le support.

La forme ondulée du cadre permet de bien comprimer le cordon ou ruban de matière adhésive sur le support entre les moyens de fixation du cadre, même si ces moyens sont relativement éloignés les uns des autres.

Dans une première forme de réalisation de l'invention, le cadre et la feuille sont solidarisés par les moyens de fixation du cadre, ce qui permet de manipuler le cadre et la feuille d'une seule pièce et facilite le montage.

Dans une autre forme de réalisation, les moyens de fixation du cadre se trouvent au-delà de la périphérie de la feuille, de sorte que le cadre et la feuille sont indépendants et peuvent être manipulés séparément.

On peut également prévoir que la face du cadre opposée à celle en contact avec la feuille comporte, dans une zone décalée par rapport au cordon ou ruban de matière adhésive, des saillies ou surépaisseurs locales destinées à former des entretoises de support d'une autre feuille d'étanchéité et d'insonorisation dans une pile desdites feuilles.

Dans ce cas, quand on empile les feuilles et les cadres, on évite que le cordon ou ruban de matière adhésive d'une feuille soit appliqué et pressé sur le cadre de l'autre feuille, ce qui permet de dépiler très facilement les feuilles et les cadres.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe transversale d'une partie de porte de véhicule automobile comprenant une feuille d'étanchéité et d'insonorisation selon l'invention ;
- la figure 2 est une vue schématique à plus grande échelle d'une partie de cette porte ;
- la figure 3 est une vue schématique de face de la partie inférieure d'une porte ;
- la figure 4 est une vue de côté de la figure 3 ;
- la figure 5 représente schématiquement une partie d'un empilement de feuilles selon l'invention ;
- la figure 6 est une vue schématique partielle de côté d'un cadre selon l'invention.

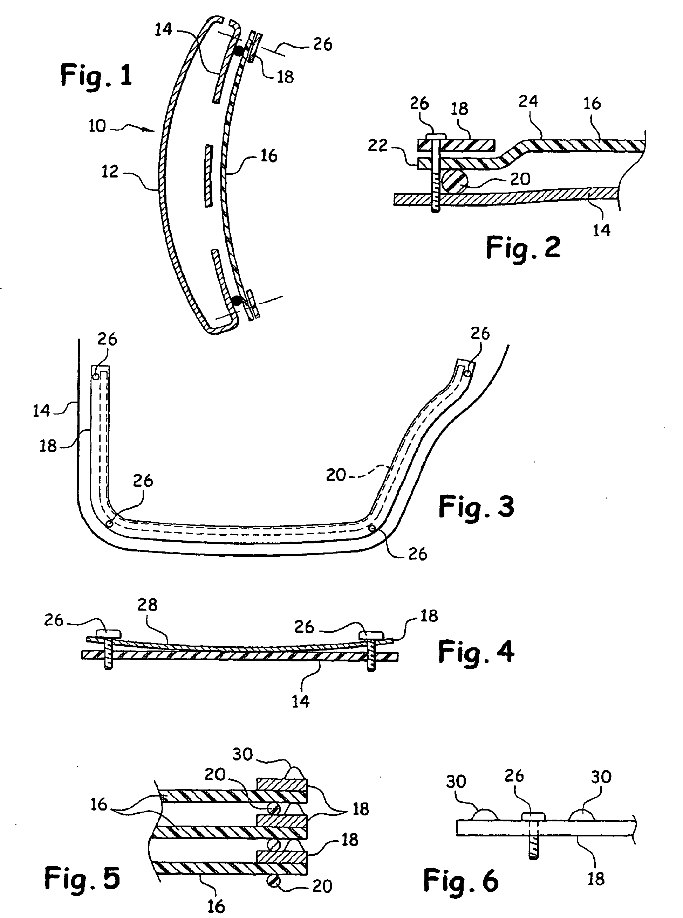

La porte 10 de véhicule automobile représentée schématiquement en figure 1 comprend une tôle extérieure 12 et une tôle intérieure 14 délimitant entre elles un espace dans lequel une vitre non représentée peut être déplacée, et une feuille 16 d'étanchéité et d'insonorisation, fixée sur la tôle intérieure 14 au moyen d'un cadre 18, la feuille 16 et le cadre 18 étant eux-mêmes destinés à être recouverts, du côté de l'intérieur du véhicule, par un panneau de finition non représenté fixé sur la tôle interne 14.

Comme on le voit mieux en figure 2, la feuille 16 d'étanchéité et d'insonorisation est fixée sur la tôle interne 14 au moyen d'un cordon 20 de matière adhésive, qui est déposé sur la face de la feuille 16 tournée vers la tôle 14 et qui s'étend le long du bord périphérique 22 de cette feuille, à faible distance de ce bord. La fixation de la feuille 16 sur la tôle 14 est assurée par compression ou écrasement partiel du cordon 20 entre la feuille 16 et la tôle 14.

En variante, le cordon 20 est remplacé par un ruban de matière adhésive, ce ruban ayant une section par exemple rectangulaire ou ovale, sa hauteur étant inférieure à sa largeur. Selon encore une autre variante, une partie au moins de la face de la feuille 16 tournée vers la tôle 14 peut être recouverte en majeure partie d'un film ou d'une couche de matière adhésive.

Selon l'invention, la fixation de la feuille 16 par collage sur la tôle 14 est assurée au moyen d'un cadre 18, qui s'étend le long du bord périphérique 22 de la feuille 16 sur sa face 24 opposée à celle tournée vers la tôle 14, de telle sorte qu'une partie du cadre 18 est alignée avec le cordon 20 de matière adhésive dans une direction perpendiculaire au plan général de la feuille 16 ou du cadre 18.

Le cadre 18 est fixé lui-même sur la tôle 14 par des moyens tels que des vis 26 ou des moyens d'encliquetage ou de clipsage, tels par exemple que des pions en sapin. La fixation du cadre 18 sur la tôle 14 par ces moyens tend à rapprocher le cadre 18 de la tôle 12 et donc à comprimer ou à écraser partiellement le cordon 20 de matière adhésive entre la feuille 16 et la tôle 14.

Les mêmes résultats sont obtenus lorsque la feuille 16 est fixée sur la tôle 12 par un ruban ou une couche de matière adhésive.

Le cadre 18 est de préférence en une matière rigide ou sensiblement rigide, comme par exemple une matière plastique injectée.

Le nombre de moyens de fixation 26 du cadre 18 sur la tôle 14 est aussi réduit que possible, d'une part pour réduire le coût et d'autre part pour diminuer le temps de fixation du cadre sur la tôle 14.

Comme cela a été représenté schématiquement en figure 3, qui est une vue de face d'une partie inférieure d'une porte de véhicule automobile, le cadre 18 peut comprendre une partie inférieure sensiblement en forme de U qui s'étend le long de la partie inférieure de la tôle 14 et une partie supérieure non représentée. La partie inférieure du cadre est fixée sur la tôle 14 par quatre vis 26 qui peuvent être relativement éloignées les unes des autres. Pour assurer malgré tout une bonne compression du ruban de colle 20 entre les vis 26, le cadre 18 peut avoir une forme générale ondulée et comprend une partie incurvée 28 entre chaque paire de vis 26 consécutives, cette partie incurvée 28 ayant une convexité tournée vers la tôle 12 de façon à assurer une compression sensiblement continue du cordon de colle 20 entre les vis 26 lorsque celles-ci sont vissées dans la tôle 14.

Dans l'exemple de réalisation représenté en figure 2, les vis 26 s'étendent à travers la feuille 16 de sorte que celle-ci constitue avec le cadre 18 un ensemble monobloc.

Pour leur transport avant utilisation, les feuilles 16 comportant les cadres 18 sont empilées les unes sur les autres comme représenté schématiquement en figure 5 de sorte que, dans cet empilement, le cordon 20 de matière adhésive d'une feuille 16 est en appui sur le cadre 18 d'une feuille 16 inférieure.

Pour réduire les difficultés de dépilage des feuilles pour leur utilisation, on peut donner à la face extérieure de chaque cadre 18, c'est à dire à sa face opposée à celle en contact avec la feuille 16, une forme irrégulière qui permet de réduire sa surface de contact avec le cordon 20 de matière adhésive d'une feuille supérieure 16 dans l'empilement. Ainsi, les cadres 18 ne sont pas fixés aux cordons 20 de matière adhésive des feuilles supérieures 16 sur toute leur surface et le dépilage des feuilles 16 est plus simple et plus rapide. Ces irrégularités de surface du cadre 18 peuvent être formées par des ondulations ou par des saillies locales ayant elles-mêmes une certaine surface, de façon à ne pas s'enfoncer profondément à l'intérieur des cordons 20 de matière adhésive.

On peut également former sur la face externe du cadre 18 des saillies locales 30 qui sont décalées par rapport au cordon 20 de matière adhésive, c'est-à-dire qui ne vont pas se trouver en alignement avec ce cordon dans un empilement de feuilles 16 tel que celui représenté en figure 5. Ces saillies locales 30 forment alors des entretoises entre le cadre 18 d'une feuille 16 inférieure et une feuille 16 supérieure, leur hauteur pouvant être sensiblement égale à celle d'un cordon 20 de matière adhésive pour éviter toute compression du cordon 20 sur le cadre 18 dans l'empilement des feuilles 16.

Bien entendu, selon les cas, la hauteur de ces saillies locales peut être soit légèrement inférieure à celle des cordons 20 de matière adhésive, soit légèrement supérieure à celle de ces cordons.

## Revendications

1. Feuille d'étanchéité et d'insonorisation pour élément de carrosserie, en particulier pour porte de véhicule automobile, dont une face comprend un cordon (20) ou un ruban de matière adhésive s'étendant le long d'un bord périphérique (22) de la feuille (16) pour sa fixation sur un support tel qu'une tôle (14), un cadre (18) appliqué sur l'autre face (24) de la feuille (16) le long du bord périphérique (22) de celle-ci, en alignement avec le cordon (20) ou ruban de matière adhésive, ce que la face du cadre (18) opposée à celle en contact avec la feuille (16) comporte des irrégularités de surface destinées à éviter toute compression du cordon (20) ou un ruban de matière adhésive sur le cadre (18) dans l'empilement des feuilles (16).

2. Feuille selon la revendication 1, **caractérisée en ce que** le cadre (18) est de forme générale ondulée et comporte, entre ses moyens (26) de fixation sur le support (14), des parties incurvées (28) destinées à appliquer la feuille (16) et le cordon (20) sur le support.

3. Feuille selon la revendication 1 ou 2, **caractérisée en ce que** le cadre (18) est en matière rigide telle par exemple qu'une matière plastique injectée.

4. Feuille selon l'une des revendications précédentes, **caractérisée en ce que** le cadre (18) et la feuille (16) sont solidarisés par les moyens (26) de fixation du cadre sur le support.

5. Feuille selon l'une des revendications 1 à 3, **caractérisée en ce que** les moyens (26) de fixation du cadre (18) s'étendent au-delà de la périphérie de la feuille (16).

6. Feuille selon l'une des revendications précédentes, **caractérisée en ce que** la face du cadre (18) opposée à celle en contact avec la feuille (16) comporte, dans une zone décalée par rapport au cordon (20) ou ruban de matière adhésive, des saillies ou surépaisseurs locales (30) destinées à former des entretoises de support d'une autre feuille (16) d'étanchéité et d'insonorisation dans un empilement desdites feuilles.

## Patentansprüche

1. Dichtungs- und Schalldämpfplatte für Karosserieteil, insbesondere für Kraftfahrzeugtür, deren eine Seite ein Band (20) oder einen Streifen aus Klebstoff, das sich einem peripheren Rand (22) der Platte (16) entlang erstreckt, für ihre Befestigung auf einem Träger, wie etwa einem Blech (14), umfasst, einen Rahmen (18), der auf die andere Seite (24) der Platte (16) an deren peripheren Rand (22) entlang, mit dem Band (20) oder Streifen aus Klebstoff ausgerichtet, angelegt wird, Befestigungsmittel (26) zur Befestigung des Rahmens am Träger (14), **dadurch gekennzeichnet, dass** die Seite des Rahmens (18), die derjenigen gegenüberliegt, die mit der Platte (16) in Berührung steht, Oberflächen-Unregelmäßigkeiten aufweist, die dazu dienen, jegliche Kompression des Bandes (20) oder Streifens aus Klebstoff am Rahmen (18) beim Stapeln der Platten (16) zu vermeiden.

2. Platte nach Patentanspruch 1, **dadurch gekennzeichnet, dass** der Rahmen (18) eine allgemein wellige Form hat und zwischen seinen Mitteln (26) zur Befestigung auf dem Träger (14) eingebogene Bereiche (28) aufweist, die dazu bestimmt sind, die Platte (16) und das Band (20) an den Träger zu drücken.

3. Platte nach Patentanspruch 1 oder 2, **dadurch gekennzeichnet, dass** der Rahmen (18) aus starrem Werkstoff, wie etwa einem Spritzkunststoff, besteht.

4. Platte nach einem der vorangehenden Patentansprüche, **dadurch gekennzeichnet, dass** der Rahmen (18) und die Platte (16) durch die Mittel (26) zur Befestigung des Rahmens am Träger miteinander verbunden sind.

5. Platte nach einem der Patentansprüche 1 bis 3, **dadurch gekennzeichnet, dass** sich die Mittel (26) zur Befestigung des Rahmens (18) über die Peripherie der Platte (16) hinaus erstrecken.

6. Platte nach einem der vorangehenden Patentansprüche, **dadurch gekennzeichnet, dass** die Seite des Rahmens (18), die derjenigen gegenüberliegt, die mit der Platte (16) in Berührung steht, in einer Zone, die gegenüber dem Band (20) oder Streifen aus Klebstoff versetzt ist, lokale Vorsprünge oder Verdickungen (30) aufweist, die dazu bestimmt sind, Stege zum Tragen einer anderen Dichtungs- und Schalldämpfplatte (16) in einem Stapel der genannten Platten zu bilden.

## Claims

1. Sealing and sound insulation sheet for a bodywork element, in particular for the door of a motor vehicle, one face of which comprises a cord (20) or a strip of adhesive material extending along one peripheral edge (22) of the sheet (16) to attach it to a base element such as a metal sheet (14), a frame (18) pressed onto the other face (24) of the sheet (16) along the peripheral edge (22) of the latter, in alignment with the cord (20) or strip of adhesive material, attachment means (26) for attaching the frame to the base element (14), **characterized in that** the face of the frame (18) opposite that in contact with the sheet (16) comprises surface irregularities intended to prevent any compression of the cord (20) or a strip of adhesive material on the frame (18) in the stacking of the sheets (16).

2. Sheet according to Claim 1, **characterized in that** the frame (18) is of generally corrugated shape and comprises, between its means (26) of attachment to the base element (14), curved portions (28) intended to press the sheet (16) and the cord (20) onto the base element.

3. Sheet according to Claim 1 or 2, **characterized in that** the frame (18) is made of rigid material such as for example an injected plastic material.

4. Sheet according to one of the preceding claims, **characterized in that** the frame (18) and the sheet (16) are fixedly attached by the means (26) of attaching the frame to the base element.

5. Sheet according to one of Claims 1 to 3, **characterized in that** the means (26) of attaching the frame (18) extend beyond the periphery of the sheet (16).

6. Sheet according to one of the preceding claims, **characterized in that** the face of the frame (18) opposite that in contact with the sheet (16) comprises, in a zone offset relative to the cord (20) or strip of adhesive material, local protrusions or greater thicknesses (30) intended to form spacers to support another sealing and sound insulation sheet (16) in a stack of said sheets.
